# EUROPÄISCHE PATENTSCHRIFT

(11) **EP 3 333 439 B1**
(45) Veröffentlichungstag und Bekanntmachung des Hinweises auf die Patenterteilung: **25.08.2021**
(21) Anmeldenummer: 17206269.7
(22) Anmeldetag: 08.12.2017
(51) Int. Cl.: F16C 33/60, F16C 35/067, F16C 19/38, F16C 11/04

(54) **VERFAHREN ZUM AUSTAUSCH EINES GEBRAUCHTEN LAGERS, INSBESONDERE ZUM AUSTAUSCH EINES GROSSLAGERS, WIE DAS HAUPTLAGER EINER WINDKRAFTANLAGE SOWIE LAGERANORDNUNG**
METHOD FOR EXCHANGING A USED BEARING, IN PARTICULAR FOR REPLACING A LARGE BEARING, SUCH AS THE MAIN BEARING OF A WIND TURBINE AND BEARING ARRANGEMENT
PROCÉDÉ DE REMPLACEMENT DU PALIER USÉ, EN PARTICULIER DE REMPLACEMENT DU PALIER DE GRAND DIAMÈTRE COMME PALIER PRINCIPAL D'UNE ÉOLIENNE ET DISPOSITIF DE PALIER

(30) Priorität: 09.12.2016 DE 102016224648
(43) Veröffentlichungstag der Anmeldung: 13.06.2018
(73) Patentinhaber: Eolotec GmbH, 90429 Nürnberg (DE)
(72) Erfinder: PICK, Mathias, 90459 Nürnberg (DE)
(74) Vertreter: FDST Patentanwälte

(56) Entgegenhaltungen:
- EP-A1- EP16 739 662
- WO-A1-2017/007922
- DE-A1- 19 824 258
- DE-A1-102004 058 905
- JP-A- 2009 063 099

## Beschreibung

Die Erfindung betrifft ein Verfahren zum Austausch eines gebrauchten Lagers durch ein neues Lager, insbesondere zum Austausch eines Großlagers, wie das Hauptlager einer Windkraftanlage. Die Erfindung betrifft weiterhin eine Lageranordnung insbesondere für ein derartiges Großlager.

Unter Großlager werden vorliegend allgemein Lager verstanden, die für hohe Traglasten beispielsweise von mehreren Tonnen ausgebildet sind und typischerweise einen Durchmesser >0,5 m und bevorzugt bis etwa 1 m aufweisen.

In den letzten Jahren hat die Windkraft eine rasante Entwicklung mit zahlreichen Technologiesprüngen hinsichtlich Leistung und Anlagendesign erlebt. Aufgrund immer kürzerer Entwicklungszyklen wurden bestehende Konzepte oftmals für die nächste Leistungsklasse lediglich nach oben skaliert. Im Bereich des Antriebsstrangs ist hier besonders die Rotorlagerung, also die Lagerung einer Rotorwelle, von der Skalierung betroffen. Die am meisten verbreitete Rotorlagerung ist die 3-Punktlagerung, die bereits bei kleinen Anlagen < 500kW breite Anwendung fand. Die Dreipunktlagerung zeichnet sich durch sehr geringen Wälzlagerkosten und einfache Montageausführung aus. Die Wälzlagerung der ersten Getriebestufe stellt das zweite Rotorlager dar und leitet die Windlasten über die Drehmomentenstützen des Getriebes in den Maschinenträger. Nachteilig an dieser Rotorlagerlösung ist die starke Beeinflussung des Getriebes durch Reaktionskräfte und Verformungen die über die Rotorlagerung eingeleitet werden. Zusätzlich führen bei Pendelrollenlagern bauartbedingte geometrische Gegebenheiten zu einer ungünstigen Lastverteilung und Lagerkinematik, was wiederum zu frühzeitigen Schäden im Rotorlager führt. Insbesondere mit der zunehmenden Skalierung dieser Lösung für größere Leistungsklassen, kann eine zunehmende Häufung von Lagerschäden beobachtet werden.

Weiterhin gibt es Rotorlagerkonzepte wie beispielsweise die sogenannte "aufgelöste Lagerung", wo statt der zweiten Lagerung in der ersten Getriebestufe zwei Pendelrollenlager oder ein zweireihiges Kegelrollenlager mit zusätzlichem Zylinderrollenlager eingesetzt werden. Auch bei diesen Lagerausführungen können aufgrund geometrischer Gegebenheiten, ungünstiger Lastverteilung und Lagerkinematik frühzeitige Schäden auftreten.

Muss ein beschädigtes Rotorlager einer Dreipunktlagerung oder einer aufgelösten Lagerung ausgetauscht werden, ist dies nach dem aktuellen Stand der Technik mit einem sehr hohen finanziellen und zeitlichen Aufwand verbunden. Da die Integration der zweiten Lagerung im Getriebe eine einfache Demontage des Lagers auf der Windkraftanlage nicht zulässt, muss die Rotorwelle incl. des gesamten Getriebes demontiert werden. Hierfür muss der gesamte Rotorstern demontiert werden. Unter Rotorstern wird dabei die sogenannte Rotornabe mit den Rotorblättern verstanden. Die Rotornabe ist endseitig an der Rotorwelle befestigt. Anschließend wird die Rotorlagerung incl. Getriebe in einer geschützten Umgebung (Fertigungshalle) demontiert. Nach der Demontage wird die neue Rotorlagerung wieder mit dem Getriebe verbunden und zurück zur Windkraftanlage transportiert. Während dieses Reparaturvorganges steht ein Kran an der Windkraftanlage, insofern keine zweite bereits fertig vormontierte Rotorlager-Getriebeeinheit im Rahmen eines Ringtausches vorhanden ist.

Bei der aufgelösten Lagerung kann oftmals das Getriebe auf der Gondel verbleiben, und lediglich die Rotorwelle mit dem Rotorstern muss demontiert werden. Das ist vor dem Hintergrund des zunehmenden Einsatzes in Offshore Anwendungen jedoch ebenfalls sehr aufwendig. Zur Demontage wird ein entsprechendes Wartungsschiff incl. Kran benötigt, was zu erheblichen Kosten und technischen Risiken führt.

Das Lager ist allgemein in einem sogenannten Lagergehäuse angeordnet, welches wiederum an einem Maschinenträger befestigt ist. Zur Vereinfachung der Erstmontage ist aus der DE 10 2004 058 905 A1 bekannt, das Lagergehäuse als geteiltes Lagergehäuse auszubilden, wobei zunächst ein Gehäuseunterteil angeordnet wird und anschließend das Lager mit mehreren Außenringsegmenten montiert wird, bevor schließlich ein Gehäuseoberteil auf das Gehäuseunterteil aufgesetzt wird. Gehäuseunterteil und Gehäuseoberteil weisen jeweils einen radial abstehenden Flansch auf, über den sie miteinander verbunden sind.

Aus der DE 10 2014 209 399 A1 ist weiterhin ein einteiliges Lagergehäuse zu entnehmen, welches an einer Seite einen verstellbaren Längsspalt aufweist. Hierdurch kann das Lagergehäuse für einen Austausch eines Pendelrollenlagers etwas geweitet werden. Hierzu wird das Pendelrollenlager in axialer Richtung aus dem Lagergehäuse herausgeschoben und anschließend aufgrund einer Segmentierung des Pendelrollenlagers kann dieses von der Rotorwelle entfernt werden.

Auch die DE 10 2004 058905 A1 offenbart ein Verfahren nach dem Oberbegriff des unabhängigen Anspruchs 1 und eine Lageranordnung nach dem Oberbegriff des Anspruchs 9.

Ausgehend hiervon liegt der Erfindung die Aufgabe zugrunde, einen einfachen Austausch eines gebrauchten Lagers, insbesondere Großlagers, wie beispielsweise das Hauptlager einer Windkraftanlage, zu ermöglichen. Insbesondere liegt der Erfindung die Aufgabe zugrunde, einen Austausch des Hauptlagers einer Windkraftanlage ohne Demontage der Rotorwelle und des Rotorsterns zu ermöglichen. Die Aufgabe wird gemäß der Erfindung gelöst durch ein Verfahren zum Austausch eines gebrauchten Lagers durch ein neues Lager gemäß Anspruch 1 sowie durch eine Lageranordnung mit den Merkmalen des Anspruchs 9. Die im Hinblick auf das Verfahren angeführten Vorteile und bevorzugten Ausgestaltungen sind sinngemäß auch auf die Lageranordnung zu übertragen und umgekehrt. Bevorzugte Ausgestaltungen und Weiterbildungen sind in den Unteransprüchen enthalten.

Für den Austausch erfolgt zunächst eine Demontage eines bestehenden alten Lagers sowie eines bestehenden Lagergehäuses. Zur Demontage dieser Komponenten werden diese geteilt und ohne Demontage der Rotorwelle entfernt. Handelt es sich bei dem bestehenden Lagergehäuse um ein erfindungsgemäßes Lagergehäuse, wie hier beschrieben, so kann dieses zerstörungsfrei geteilt und demontiert werden. Handelt es sich um ein herkömmliches Lagergehäuse, so ist ein Zerstören des alten Lagergehäuses erforderlich, beispielsweise durch Trennschweißen, Sprengen, Sägen, Drahterrodieren, etc. Gleiches gilt auch für das gebrauchte Lager. Sofern es sich hierbei um ein geteiltes Lager handelt, kann dieses zerstörungsfrei entfernt werden. Andernfalls erfolgt auch hier ein Zerstören des Lagers durch Trennschweißen, Sprengen, Sägen, Drahterrodieren etc.

Das neue Lager ist als ein geteiltes Lager ausgebildet, welches in Umfangsrichtung in mehrere, vorzugsweise zwei, Lagerringsegmente geteilt ist. Die Lagerringsegmente werden um die Rotorwelle angebracht und anschließend miteinander verbunden. Für dieses neue Lager ist weiterhin ein geteiltes Lagergehäuse vorgesehen, welches in Umfangsrichtung in zumindest ein erstes Gehäusesegment sowie zumindest ein zweites Gehäusesegment unterteilt ist. Das Lagergehäuse wird im Laufe der Montage an einem Maschinenträger befestigt. Erfindungsgemäß ist vorgesehen, auch das Lagergehäuse, also die beiden Gehäusesegmente, ohne Demontage der Rotorwelle um diese herum und um das Lager anzubringen. Von wesentlicher Bedeutung ist hierbei, dass das Lagergehäuse derart ausgebildet und geteilt ist, dass es ohne Demontage der Rotorwelle um diese herum angeordnet und am Maschinenträger befestigt werden kann. Der Maschinenträger ist hierbei üblicherweise zumindest im Bereich des Hauptlagers nach Art einer Halbschale ausgebildet, die eine Hälfte der Lageranordnung aufnimmt. Das Lagergehäuse stützt sich seitlich mit radial auskragenden Befestigungsschenkeln auf einem Rand des Maschinenträgers ab und ist dort mit diesem befestigt. Das Lagergehäuse mit den Gehäusesegmenten ist daher insgesamt derart ausgebildet, dass es trotz derartiger erforderlicher seitlich auskragender Befestigungsschenkel um die Rotorwelle herum montierbar ist.

Durch diese Maßnahmen ist der Austausch des Lagers erheblich beschleunigt, wodurch hohe Kosten für Krankapazitäten und technische Risiken für Mensch und Maschine bei der Demontage der tonnenschweren Rotoren und Getriebe vermieden ist. Der (Rotor-) Lagertausch ist zudem deutlich weniger abhängig von den Windverhältnissen, da nur sehr leichte Lasten mit geringer Angriffsfläche für Wind gehoben werden. Dies ermöglicht eine sichere und schnellere Montage bei höheren Windgeschwindigkeiten. Bei Offshore-Windkraftanlagen ist sogar unter Umständen eine Bereitstellung der leichten und kleinen Austauschkomponenten per Helikopter ermöglicht. Viele bestehende Anlagen haben hierfür entsprechend Vorrichtungen und Bordkrananlagen um die Lager- und Gehäuseteile zu handhaben.

Zur Montage/Demontage des Lagergehäuses stehen hierbei unterschiedliche Möglichkeiten zur Verfügung:
Gemäß einer ersten bevorzugten Ausgestaltung wird das erste Gehäusesegment zur Montage/Demontage um die Rotorwelle gedreht, insbesondere in den Maschinenträger eingedreht. Im weiteren Verlauf der Montage wird es mit dem zweiten Gehäusesegment verbunden. Durch diese Maßnahme wird also durch eine rotatorische Bewegung das Gehäusesegments quasi unter die Rotorwelle zwischen dieser und dem Maschinenträger eingebracht, sodass also die Rotorwelle von dem ersten Gehäusesegment untergriffen wird.

In einer bevorzugten Ausgestaltung wird dabei derart vorgegangen, dass insbesondere das erste Gehäusesegment mit Hilfe des bereits auf der Rotorwelle montierten Lagers eingedreht wird. Bevorzugt wird hierzu das Gehäusesegment auf einen Außenring des Lagers aufgelegt und anschließend mit diesem um die Rotationsachse des Lagers und damit um die Rotorwelle gedreht.

In einer bevorzugten Alternative erfolgt anstelle eines oder ergänzend zu einer rotatorischen Bewegung ein linearer Bewegungsablauf. Für diese zweite Variante wird das erste Gehäusesegment in einer Richtung senkrecht zur Rotorwelle seitlich an dieser vorbeigeführt. Sofern erforderlich, wird das erste Gehäusesegment zusätzlich noch radial in Richtung zu Rotorwelle versetzt und an die gewünschte Position gebracht. Bei diesem radialen Versatz in Richtung zur Rotorwelle handelt es sich also um eine zweite Linearbewegung. Nachfolgend wird das erste Gehäusesegment wiederum mit dem zweiten Gehäusesegment verbunden. Die Bewegung des ersten Gehäusesegments senkrecht zur Rotorwelle erfolgt insbesondere indem das erste Gehäusesegment von oben seitlich an der Rotorwelle vorbeigeführt wird. Dies kann in einfacher Weise hängend, beispielsweise mithilfe eines Krans erfolgen. Alternativ hierzu wird das erste Gehäusesegment seitlich und in horizontaler Richtung zunächst unter die Rotorwelle geschoben und anschließend beispielsweise angehoben. Die erstere Variante ist die bevorzugte, da bei dieser der Maschinenträger weniger störend ist.

Die Anordnung des ersten Gehäusesegments erfolgt dabei zweckdienlicherweise bei noch nicht montiertem Lager oder an einer axialen Position beabstandet vom bereits zumindest teilweise an der Rotorwelle angeordneten Lager. Hierdurch steht für die Montage/Demontage der Gehäusesegment im Maschinenträger mehr Platz zur Verfügung, sodass also die typischerweise zumindest partiell kreissegmentförmigen Gehäusesegmente an der Rotorwelle vorbeigeführt werden können.

In zweckdienlicher Weise wird auch das zweite Gehäusesegment identisch wie das erste Gehäusesegment gehandhabt, also entweder ebenfalls um die Rotorwelle gedreht oder seitlich an dieser vorbeigeführt. In diesen Fällen ist das Lagergehäuse insbesondere entlang einer vertikalen Trennebene getrennt, sodass also Trennstellen zwischen den beiden Gehäusesegmenten an einer 0°- und 180°-Position (oben und unten) angeordnet sind. Sofern vorliegend von "oben" und "unten" gesprochen wird, so wird hierbei die geodätische Richtung in Richtung der Schwerkraft verstanden.

Wie bereits erwähnt werden die Gehäusesegmente beabstandet vom Lager montiert. In zweckdienlicher Ausgestaltung ist allgemein vorgesehen, dass nach der Montage des ersten und/oder des zweiten Gehäusesegments dieses entlang der Rotorwelle axial verschoben wird, speziell derart, dass das jeweilige Gehäusesegment axial in Richtung zum bereits montierten Lager verschoben wird. Zweckdienlicherweise erfolgt hierbei ein sukzessives Verschieben der beiden Gehäusesegmente, sodass also zunächst an einer axialen Montageposition das erste Gehäusesegment angebracht wird, dieses dann axial verschoben wird, anschließend das zweite Gehäusesegment an der axialen Montageposition angebracht und schließlich dieses dann axial in Richtung zum ersten Gehäusesegment verschoben wird. Anschließend werden die Gehäusesegmente miteinander verbunden. Ein axiales Verschieben beider Gehäusesegmente ist insbesondere bei einer vertikalen Teilungsebene vorgesehen.

Die beiden Gehäusesegmente werden dabei in Richtung zum Lager verschoben. Alternativ wird das Lager in Richtung zu den Gehäusesegmenten verschoben. Durch dieses sukzessive Vorgehen steht für die Anordnung des jeweiligen Gehäusesegments an der Rotorwelle jeweils mehr Platz im beschränkten Raum des Maschinenträgers zur Verfügung.

In zweckdienlicher Weiterbildung wird eine Traverse montiert, welche die Rotorwelle abstützt. Die Montage der Traverse erfolgt dabei vor der Demontage des gebrauchten Lagers und des gebrauchten Lagergehäuses. Hierdurch werden also die Kräfte und/oder Momente der Rotorwelle, die ansonsten vom Lager übernommen werden, von der Traverse abgefangen, sodass eine Montage/Demontage ohne Ausbau der Rotorwelle sowie des Rotorsterns zuverlässig ermöglicht ist.

In bevorzugter Weiterbildung sind die beiden Gehäusesegmente in Umfangsrichtung und/oder in Richtung der Rotorwelle formschlüssig miteinander verbunden. Ergänzend ist eine kraftschlüssige Verbindung, beispielsweise durch ein Verschrauben oder durch ein Verklemmen vorgesehen. Durch die formschlüssige Verbindung ist eine möglichst exakte Relativpositionierung der beiden Gehäusesegmente zueinander gewährleistet. Für die formschlüssige Verbindung sind entsprechend an den beiden Gehäusesegmenten geeignete Formschlusselemente, wie Anschlagsflächen etc. ausgebildet. In bevorzugter Ausgestaltung weisen die beiden Gehäusesegmente im Bereich ihrer Kontakt- und Verbindungsflächen eine Riffelung oder eine Verzahnung auf, über die die gewünschte axiale und/oder in Umfangsrichtung wirksame formschlüssige Verbindung ausgebildet wird.

Geteilte Lager, insbesondere Wälzlager haben zwei grundlegende Nachteile, gegenüber konventionellen ungeteilten Wälzlagern. Bei einem geteilten Wälzlager existiert immer eine Trennfuge die ein Schwachpunkt für die Überrollfestigkeit und somit Lebensdauer der Lagerung darstellt. Das ist auch der Grund weshalb nicht bereits bei neuen Windkraftanlagen geteilte Lagerungen verbaut werden. Der zweite Nachteil liegt in der zusätzlichen Lagerringbreite aufgrund der erforderlichen Verbindung der Lagerringsegmente mittels Schrauben.

Um den ersten Nachteil zu vermeiden ist die Trennfuge zwischen den Lagerringsegmenten vorzugsweise durch eine besondere windlastspezifische Profilierung freigeschliffen. Zwischen den beiden Lagerringsegmenten ist vorzugsweise daher ein Spalt vorgesehen. Die Trennfuge ist dabei insbesondere unter einem von 90° verschiedenen Winkel bezüglich einer Ringinnenseitenfläche orientiert, um zu vermeiden, dass der jeweilige Wälzkörper auf einmal in den Bereich der Trennfuge einrollt. Zusätzlich wird die Trennfuge der Lagerringsegmente vorzugsweise gezielt auf einen Winkel von 86,5-93,5° bezogen auf die der Umfangsrichtung der Laufbahn angeordnet. Hierdurch wird vermieden, dass die gesamte Wälzkörperflanke auf einmal in die Trennfuge einläuft. Das reduziert die Last auf beide Wälzkörper und gewährleistet eine bessere Schmierung und Kinematik und somit Lebensdauer der Lagerung.

Eine weitere bevorzugte Ausprägung stellt die gezielte Anordnung der Trennfuge des Außenrings im Bezug auf das Lagergehäuse dar. Hier haben zahlreiche Lastanalysen gezeigt, dass es besonders günstig für die Lebensdauer des Hauptlagers ist, die zwei Trennfugen zwischen 2-4 Uhr und 8-10 Uhr anzuordnen. In diesen Bereichen treten geringere Lasten auf und der Wälzkörper ist mit geringeren Zwangskräften beaufschlagt. Die Trennfugen sind daher in bevorzugter Ausgestaltung in diesen Bereichen angeordnet.

Entgegen der bisherigen eingesetzten Technik, beispielsweise Sprengtechnik zur Teilung der Lagerringe wird bevorzugt ein feines mechanisches Trennen der Ringe vorgesehen (z.B. Drahterodieren). Hierbei lässt sich eine gezielte Ausrichtung des Spaltes einstellen und vor allen eine definierte Spaltbreite zwischen den Ringsegmenten sicherstellen (beispielsweise im Bereich von wenigen mm, 0,5mm bis 4mm, insbesondere etwa 2mm). In Verbindung mit den nachfolgend noch beschriebenen Spannelementen zur Verbindung der Ringsegmente lässt sich hierdurch ein höherer und genauerer Fugendruck zwischen gefügten Lagerinnenring und Rotorwelle einstellen.

Eine weitere Einschränkung für den zukünftigen Einsatz in der Windkraft bisheriger geteilter Wälzlager stellt die Abweichung der Abmessungen der geteilten Lager von den Standardabmessungen der Basiswälzlager dar, was bei einem Austausch aufgrund der bestehenden geometrischen Randbedingungen zu Problemen führen kann. Insbesondere die Breite der Lagerringe weicht deutlich von den genormten Einbaumaßen ab. Ein zu breiter Lagerring führt jedoch zu erheblichen Problemen bei der Montage auf dem bestehenden Lagersitz der Rotorwelle bzw. kann eine Montage auf der bestehenden Rotorwelle unmöglich machen. Muss jedoch die Rotorwelle ausgetauscht werden, müsste wiederum der Rotor und das Getriebe demontiert werden und sämtliche Vorteile einer geteilten Rotorlagerlösung wären verloren. Aus diesem Grund werden nachfolgend neuartige Lösungsansätze für ein möglichst schmales geteiltes Wälzlager vorgestellt.

In bevorzugten Ausgestaltungen werden diesbezüglich unterschiedliche Lösungsansätze verfolgt:
Da bei einem Lagerschaden bereits oftmals 50% der erforderlichen Lebensdauer erreicht sind, kann das neu verbaute Wälzlager eine geringere Tragzahl aufweisen. Allerdings muss bei der Auslegung der Lagerung nicht nur die Betriebslast berücksichtigt werden, sondern ebenso Extremereignisse. In den letzten Betriebsjahren können ebenso Extremereignisse (50-Jahres-Böe)) auftreten, die wiederum zur Überlastung und Beschädigung des Wälzlagers führen. Es muss somit sichergestellt werden, dass das Lager sowohl den Betriebslasten als auch den Extremlasten gerecht wird. Erfindungsgemäß wird sich hier folgender Gedankengang hinsichtlich der Lebensdauerberechnung zunutze gemacht.

Es werden im Vergleich zu einem herkömmlichen Lager, welches für eine maximale Lebensdauer ausgelegt ist, bzw. im Vergleich zu dem auszutauschenden Lager auf einem gleichen oder ähnlichen Teilkreis deutlich mehr Wälzkörper mit einem kleinen Durchmesser am Umfang angeordnet. Durch die Vielzahl an kleineren Wälzkörpern ergeben sich deutlich mehr Tragstellen im Lager, was die statische Tragzahl und somit die statische Sicherheit für die Extremlasten erhöht. Ungünstig ist diese Ausführung jedoch für die Lebensdauer, da durch die zusätzlichen Wälzkörper sich die Anzahl der Überrollung erhöht und somit die Lastwechsel steigen. Trotz geringerer Last der einzelnen Wälzkörper führt die Zunahme der Lastwechsel zu einer geringeren Lebensdauer des Wälzlagers. Dies ist jedoch unproblematisch, da das geteilte Austauschlager ja nur noch einen Teil, beispielsweise 50% der ursprünglich erforderlichen Lebensdauer benötigt. Erfindungsgemäß hat sich hier eine Erhöhung der Wälzkörperanzahl um 10-35% und eine Reduzierung des Wälzkörperdurchmessers um 5-30% als besonders günstig gezeigt. Das somit gewonnene zusätzliche Potenzial der statischen Tragzahl kann nun gezielt genutzt werden, um die Länge der Wälzkörper zu reduzieren und somit axialen Bauraum für die Verbindung der zwei Lagerringsegmente zu gewinnen. Ein weiterer positiver Effekt dieser Ausführung ist, dass durch den verringerten Wälzkörperdurchmesser mehr radialer Bauraum für die Integration der Befestigungselemente am Außenring bzw. Innenring generiert wird.

Allgemein werden für die Hauptlager häufig mehrreihige, insbesondere doppelreihige Lager vorgesehen. Aufgrund der unterschiedlichen Belastung beider Lagerreihen ist es auch zielführend, die Wälzkörper von einer der beiden Lagerreihen kürzer zu gestalten. Dieser führt zwar zu einer geringeren Lebensdauer und statischer Sicherheit der einen Wälzkörperreihe, kann jedoch entsprechend der zulässigen Auslegungsgrenzen zur Reduzierung des axialen Bauraums der Lagerringe genutzt werden.

Neben den lagerspezifischen Ansätzen zur Reduzierung des Bauraumes ist es zielführend an einer neuartigen und platzsparenden Verbindungstechnik der Lagerringsegmente zu arbeiten. Bei konventionellen geteilten Wälzlagern werden die beiden Lagerringsegmente des Innenrings und des Außenrings mittels Schrauben gefügt. Bei dem Außenring von Pendelrollenlager wird der erhöhe Ringquerschnitt an den Außenseite genutzt um die Schrauben ohne erhöhte Ringbreite unterzubringen. Bei dem Innenring dieser Lagerbauform gestaltet sich dies schon deutlich schwieriger, weswegen die Verschraubung nach dem Stand der Technik in einem zusätzlichen axialen Ansatz untergebracht wird. Dieser Ansatz führt jedoch zu einer deutlich größeren Lagerinnenringbreite, die sich bei einer Austauschlösung problematisch gestaltet. Um diese technische Limitierung zu lösen werden nachfolgende Lösungsansätze zur neuartigen Verbindungslösungen für die Lagerringsegmente vorgestellt.

Hierbei werden die Lagerringsegmente form- und kraftschlüssig durch entsprechende Klemmelemente anstatt der bisherigen Verschraubung miteinander verbunden. An den Lagerringsegmenten werden entsprechende Gegenformen vorgesehen, die eine axiale und radiale Sicherung und Zentrierung darstellt. Die Klemmelemente werden entsprechend mechanisch und/oder thermisch gelängt und dann über die Gegenform geführt. Nach Entlastung und/oder Abkühlung der Klemmelemente entsteht eine gezielter Kraft- und Formschluss der die Ringe dauerhaft zusammenhält. Die Klemmelemente können mannigfaltig ausgeführt sein und sich radial über die Trennfuge der Lageringsegmente erstrecken bzw. axial in die Stirnflächen der beiden Lagerringsegmente eingreifen. Entscheidend sind bei der konstruktiven Ausführung ein geringer axialer Bauraum des zusammengefügten Lagerrings und eine zuverlässige Verbindung incl. ausreichender Fugenpressung für den Lagersitz auf der Rotorwelle. Die nachfolgende Darstellung verdeutlicht schematisch eine mögliche Ausführung eines solchen Klemmelements am Innenring. Vorzugsweise erstrecken sich die zwei Segmente über 5-180° des Lagerringumfangs. Bei einem größeren Winkel z.B. 180° können die Klemmelemente mehr Kraft für den gewünschten Form-und Kraftschluss aufbringen, insbesondere wenn Sie der Form-und Kraftschluss durch Erwärmen mit nachfolgendem Abkühlen ausgebildet wird.

Wie bereits erläutert, erfolgt die Montage/Demontage des Lagers ohne Demontage der Rotorwelle sowie des Rotorsterns. D.h. während des Austauschs ist die Rotorwelle mit einer Nabe verbunden, an der die Rotorblätter befestigt sind. Nabe und Rotorblätter bilden den Rotorstern. Während der Montage des neuen Lagers ist nunmehr vorgesehen, dass die Nabe, und damit der Rotorstern, gegen eine Verdrehung gesichert ist. Hierzu ist in bevorzugter Ausgestaltung vorgesehen, dass zunächst nach der Teilung des alten Lagergehäuses ein Teil desselben noch am Maschinenträger befestigt und mit der Nabe zur Verdrehsicherung über ein erstes Versicherungselementverbunden ist. Bei diesem Sicherungselement handelt es sich insbesondere um einen sogenannten Rotorlock, welcher insbesondere durch einen sich in axialer Richtung erstreckenden Bolzen bereitgestellt ist. Dieser greift durch eine Rotorlockbohrung im Lagergehäuse hindurch und in eine entsprechende Aufnahme an der Nabe ein. Während das erste Sicherungselement noch über das alte Lagergehäuse wirksam ist, wird eines der neuen Gehäusesegmente am Maschinenträger befestigt und das neue Gehäusesegment des neuen Lagergehäuses wird mit der Nabe zur Verdrehsicherung über ein zweites Sicherungselement verbunden. Anschließend wird die Verdrehsicherung über das erste Sicherungselement gelöst und das alte Lagergehäuse wird vollständig entfernt. Durch diese Maßnahme ist während der Montage/Demontage jeweils sichergestellt, dass der Rotor und damit der Rotorstern gegen ein Verdrehen gesichert ist.

Für das (neue) Lagergehäuse und dessen Teilung bestehen unterschiedliche bevorzugte Ausführungsvarianten, wie sie insbesondere im Anspruch 13 wiedergegeben sind.

Allen Varianten ist dabei gemein, dass zumindest an dem ersten Gehäusesegment, das um die Rotorwelle gedreht oder seitlich an dieser vorbeigeführt werden soll, lediglich maximal ein radial auskragender Befestigungsschenkel angeordnet ist, über den eine Befestigung am Maschinenträger erfolgt. Dies ermöglicht die Montage um die Rotorwelle.

Gemäß einer bevorzugten ersten Variante sind zwei Gehäusesegmente vorgesehen, wobei jedes der Gehäusesegmente genau einen Befestigungsschenkel aufweist, welcher endseitig am jeweiligen Gehäusesegment ausgebildet ist. Mit dem gegenüberliegenden Ende stützt sich das jeweilige Gehäusesegment dann am Befestigungsschenkel oder zumindest im Bereich des Befestigungsschenkels des anderen Gehäusesegments ab. Bevorzugt handel es sich dabei um Gleichteile, die lediglich 180° drehversetzt zueinander orientiert sind. Durch diese Ausgestaltung wird insbesondere eine vereinfachte Montage, wie beispielsweise seitliches Vorbeiführen an der Rotorwelle oder auch Eindrehen um die Rotorwelle ermöglicht, da nur an einer Seite eines jeweiligen Gehäusesegments der Befestigungsschenkel ausgebildet ist, welcher aufgrund der beengten Einbausituation bei der Montage störend sein kann. Bei dieser Ausführungsvariante ist die Teilungsebene im montierten Zustand vorzugsweise horizontal ausgerichtet.

Gemäß einer bevorzugten zweiten Alternative ist an jedem der Gehäusesegmente (bei vorzugsweise lediglich zwei Gehäusesegmenten) wiederum lediglich genau ein Befestigungsschenkel vorgesehen, wobei dieser im Unterschied zu der vorhergehenden Ausführungsvariante nunmehr beabstandet von den Segmentenden und vorzugsweise mittig angeordnet ist. Diese Ausgestaltung ist insbesondere für Anordnungen angedacht, bei denen zwischen den beiden Gehäusesegmenten eine vertikale Teilungsebene ausgebildet ist. Bei der zweiten Ausführungsvariante besteht wiederum die Möglichkeit, dass ein jeweiliges Gehäusesegment beispielsweise um eine Vierteldrehung eingedreht wird, bis der Befestigungsschenkel seitlich auf dem Maschinenträger zum, Aufliegen kommt. Alternativ können die Gehäusesegmente auch zunächst seitlich an der Rotorwelle vorbeigeführt werden, beispielsweise mittels eines Krans von oben eingehoben werden. Auch bei dieser zweiten Variante handelt es sich bei den beiden Gehäusesegmenten bevorzugt um Gleichteile.

Gemäß einer dritten Variante sind wiederum zwei Gehäusesegmente vorgesehen, welche jedoch unterschiedlich ausgebildet sind. Speziell weist das erste Gehäusesegment keinen Befestigungsschenkel auf und lediglich das zweite Gehäusesegment weist an seinen Segmentenden jeweils einen Befestigungsschenkel zur Befestigung am Maschinenträger auf. Das erste Gehäusesegment wird als ein unteres Gehäusesegment verwendet, welches also unter die Rotorwelle platziert wird, speziell durch ein Eindrehen. Aufgrund des Verzichts der Befestigungsschenkel ist diese aufgrund des geringen Bauraums ohne weiteres möglich.

Gemäß einer vierten Variante sind mehr als zwei und vorzugsweise vier Gehäusesegmente vorgesehen. Durch die mehrteilige Ausgestaltung lassen sich diese bei den beengten Einbausituationen einfacher um die Rotorwelle platzieren. In bevorzugter Ausgestaltung ist dabei vorgesehen, dass jeweils ein Paar der insgesamt vier Gehäusesegmente als Gleichteile ausgebildet sind. Die Gehäusesegmente des einen Paares weisen vorzugsweise jeweils endseitig genau einen Befestigungsschenkel auf.

Gemäß einer weiteren, fünften Ausführungsvariante ist weiterhin vorgesehen, dass das Lagergehäuse als solches und damit die Gehäusesegmente, eine integrierte Laufbahn aufweisen oder ausbilden und damit einen Außenring des Lagers ausbilden.

Aufgrund der geteilten Ausgestaltung des Lagers sowie auch des Gehäuses ist eine möglichst genaue Platzierung und Anordnung der einzelnen Segmente zueinander von Vorteil. Hierzu ist zum einen die formschlüssige Ausgestaltung in radialer/in Umfangsrichtung sowie in Axialrichtung mit entsprechenden Anlageflächen an den Verbindungsebenen der Segmente vorgesehen, wie zuvor beschrieben. Ergänzend wird in bevorzugter Ausgestaltung durch den Aufbau der Lageranordnung sichergestellt, dass die einzelnen Segmente gegeneinander gepresst werden, sodass sie möglichst passgenau aneinander anliegen.

Das Lager weist allgemein Lagerringe auf, nämlich einen Innenring und einen Außenring, die jeweils in Lagerringsegmente unterteilt sind. Das Lager wird vorzugsweise in Axialrichtung gespannt. Hierzu wird mithilfe eines Spannelements, beispielsweise eine Wellenmutter, das Lager, beispielsweise unter Zwischenlage von sogenannten Spannringen gespannt. Das Spannelement für den Außenring wird beispielsweise durch Teile des Lagergehäuses, speziell durch sogenannte Lagerdeckel, die in axialer Richtung angeordnet sind, erzeugt.

In bevorzugter Ausbildung ist nunmehr vorgesehen, dass zumindest zwischen einem der Lagerringe und einem Spannelement ein Kegelsitz ausgebildet ist, und zwar derart, dass bei einem axialen Verspannen des Spannelements eine radiale Spannkraft auf den jeweiligen Lagerring ausgeübt wird. Vorzugsweise werden beide Lagerringe auf dieses Weise gespannt, wobei auf den äußeren Lagerring der Gehäusedeckel als Spannelement wirkt und auf den inneren Lagerring beispielsweise eine Wellenmutter. Der Lageraußenring weist beispielsweise eine umfangsseitige Außenfläche auf, die einen Kegelsitz ausbildet. Durch Verspannen der Gehäusedeckel in Axialrichtung wird gleichzeitig das umlaufende Gehäusesegment des Lagergehäuses in axialer Richtung versetzt, sodass aufgrund des Kegelsitzes zwischen dem Lagergehäuse und dem Lageraußenring eine in radialer Richtung wirkende Spannkraft erzeugt wird. Im Bereich des Innenrings weist dieser vorzugsweise an seinen randseitigen Schultern jeweils einen Kegelsitz auf, zumindest an einer umlaufenden Randseite, auf die das Spannelement oder zumindest ein Spannring einwirkt.

Ausführungsbeispiele der Erfindung werden nachfolgend anhand der Figuren näher erläutert. Diese zeigen jeweils in vereinfachten Darstellungen:
- Fig.1: eine perspektivische ausschnittsweise Darstellung eines Maschinenträgers mit Rotorwelle, Traverse (Rotor-)Lager sowie einer Nabe,
- Fig. 2: eine perspektivische Explosionsdarstellung eines Lagers,
- Fig. 3A,3B: eine perspektivische Darstellung sowie eine Explosionsdarstellung eines Lagergehäuses gemäß einer ersten Ausführungsvariante,
- Fig. 4A,4B: eine perspektivische Darstellung sowie eine Explosionsdarstellung eines Lagergehäuses gemäß einer zweiten Variante,
- Fig. 5A,5B: eine perspektivische Darstellung sowie eine Explosionsdarstellung eines Lagergehäuses gemäß einer dritten Variante,
- Fig. 6a,6B: eine perspektivische Darstellung sowie eine Explosionsdarstellung eines Lagergehäuses gemäß einer vierten Variante,
- Fig. 7: eine Darstellung nach Art einer Schnittdarstellung eines Längsschnitts entlang einer Längsachse durch eine Lageranordnung (obere Hälfte),
- Fig. 8: eine Ansicht in Blickrichtung der Rotorwelle auf eine Lageranordnung mit Maschinenträger,
- Fig. 9A bis 9F: verschiedene Darstellungen der Lageranordnung zur Erläuterung des Montageprozesses sowie
- Fig. 10: eine ausschnittsweise Darstellung im Verbindungsbereich zweier Gehäusesegmente des Lagergehäuses.

In den Figuren sind gleich wirkende Teile mit den gleichen Bezugszechen dargestellt.

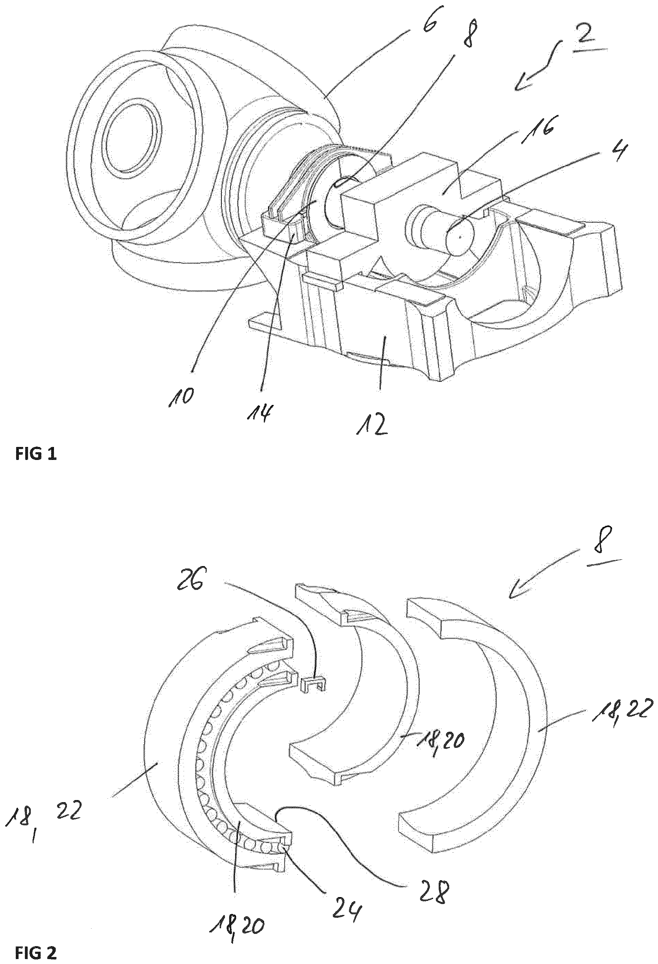

Fig. 1 zeigt eine ausschnittsweise Darstellung einer Lageranordnung 2 einer Windkraftanlage. Und zwar betrifft es die Lageranordnung 2 eines Haupt- oder auch Rotorlagers, mit dem eine Rotorwelle 4 gelagert ist. An der Rotorwelle 4 ist frontendseitig eine Nabe 6 befestigt. An dieser sind in hier nicht näher dargestellter Weise mehrere, typischerweise drei, Rotorblätter angeordnet. Die Rotorwelle 4 ist üblicherweise mit einem Getriebe und/oder Generator verbunden, welcher in der Fig. 1 nicht dargestellt ist. Die Rotorwelle 4 ist in einem Lager 8 gelagert. Hierbei handelt es sich allgemein um ein Großlager und speziell um das bereits erwähnte Hauptlager der Windkraftanlage. Das Lager 8 wiederum ist in einem Lagergehäuse 10 angeordnet, welches an einem Maschinenträger 12 befestigt ist. Der Maschinenträger 12 weist zumindest im Bereich des Lagergehäuses 10 eine in etwa halbschalenartige Ausgestaltung auf, weist also einen Freiraum oder eine Ausnehmung auf, in die das Lagergehäuse 10 sowie das Lager 8 teilweise eintauchen. Das Lagergehäuse 10 stützt sich auf einem seitlichen Auflagerand des Maschinenträgers 12 mit Befestigungsflanschen 14 ab, die in radialer Richtung senkrecht zu einer Axialrichtung überstehen. Die Axialrichtung ist durch die Längsrichtung der Rotorwelle 4 definiert.

Auf der der Nabe 6 gegenüberliegenden Seite des Lagers 8 ist die Rotorwelle 4 üb er eine Traverse 16 abgestützt. Die Rotorwelle 4 ist im montierten Zustand durch die Traverse 16 hindurchgeführt. Zur einfachen Montage der Traverse 16 ist diese vorzugsweise als eine geteilte Traverse 16 ausgebildet. Die Traverse 16 stützt sich auf dem Maschinenträger 12 ab und ist mit diesem befestigt. In der dargestellten Situation in Fig. 1 ist das Getriebe bzw. der Generator nicht dargestellt. An diesem stützt sich die Rotorwelle 4 typischerweise ergänzend ab.

Die Traverse 16 ersetzt während der Montage/Demontage des Lagers 8 einen Lagerpunkt für die Rotorwelle 4. Die Traverse 16 ist lediglich während der Montage/Demontage des Lagers 8 angebracht.

Für den Austausch eines gebrauchten Lagers durch ein neues Lager 8 ohne eine Demontage der Rotorwelle 4 sowie der Nabe 6 bzw. des gesamten Rotorsterns und ergänzend auch ohne Demontage des Getriebes ist grundsätzlich vorgesehen, dass das Lager 8 in Lagerringsegmente 18 und das Gehäuse 10 in Gehäusesegmente 10A, 10B unterteilt ist. Beim Austausch wird weiterhin zunächst die Traverse 16 zur Abstützung der Rotorwelle 4 montiert. Anschließend wird das gebrauchte Lager sowie das Lagergehäuse entfernt, falls erforderlich durch Zerstörung dieser Komponenten, beispielsweise Trennschweißen, Sprengen etc. Anschließend wird das neue Lager 8 sowie das Lagergehäuse 10 aufgrund der geteilten Ausgestaltung um die Rotorwelle 4 montiert, bevor dann anschließend wieder die Traverse 16 entfernt wird.

Anhand der Fig.2 ist zunächst beispielhaft das geteilte Lager 8 dargestellt. Dieses weist einen Innenring 20 und einen Außenring 22 auf, die jeweils in zwei Lagersegmente 18 geteilt sind, die sich jeweils über 180° erstrecken. Zwischen den beiden Ringen 20,22 sind Wälzkörper 24 angeordnet. Bei dem Lager handelt es sich beispielsweise um ein vorzugsweise zweireihiges Lager, insbesondere um ein Pendelrollenlager. Grundsätzlich sind auch andere, für Hauptlager bekannte Lagerausgestaltungen möglich.

Die Lagerringsegmente 18 sind in zweckdienlicher Ausgestaltung ausschließlich über Klemmelemente 26 miteinander verbunden. An den axial gegenüberliegenden Stirnaußenseiten eines jeweiligen Lagersegments 18 sind hierzu im Ausführungsbeispiel Gegenform-Elemente in Form von Aussparungen ausgebildet, welche Hintergiffsflächen für die Klemmelemente 26 bilden. Die Klemmelemente 26 sind beispielsweise nach Art von Klammern ausgeführt. Die Klemmelemente werden bei der Montage beispielsweise mechanisch und/oder thermisch gelängt und montiert. Nach Entlastung und/oder Abkühlung entsteht ein Kraft- und Formschluss, welcher die Lageringsegmente 18 dauerhaft zusammenhält. In der Teilungsebene der Lagerringsegmente ist jeweils eine Trennfuge 28 ausgebildet. Über diese rollen die Wälzkörper 24 im Betrieb ab. Um die Belastung möglichst gering zu halten ist die Trennfuge frei geschliffen, sodass ein Spalt ausgebildet ist. Die Teilungsebene der Lagerringsegmente 18 ist zweckdienlicherweise derart gewählt, dass die Trennfugen 28 im Bereich zwischen 2:00 Uhr und 4:00 Uhr sowie 8:00 Uhr und 10:00 Uhr angeordnet sind.

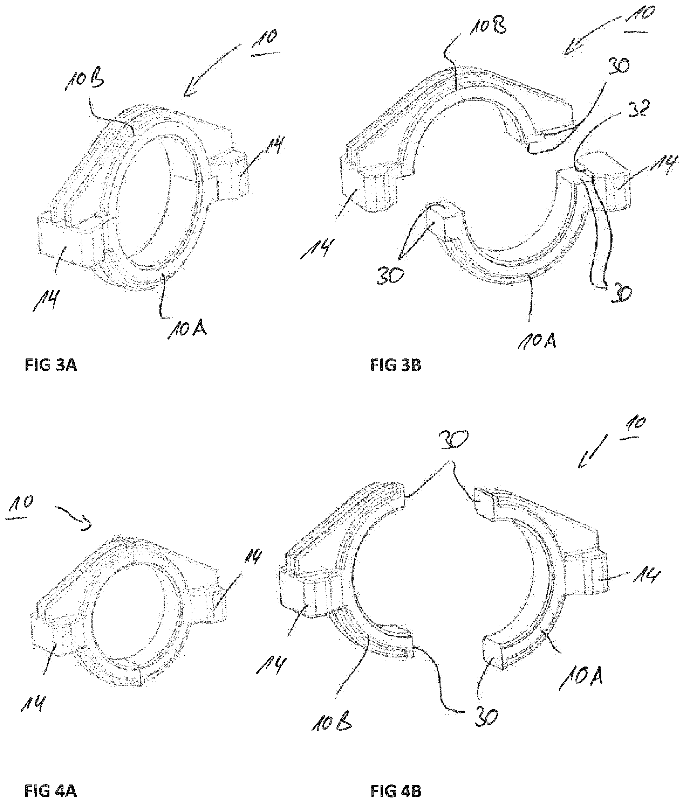

In den Fig. 3 bis 6 sind unterschiedliche Varianten für das Lagergehäuse 10 in vereinfachter Darstellung gezeigt: In allen Varianten ist das Lagergehäuse 10 im montierten Zustand durch einen ringförmigen Grundkörper gebildet, von dem seitlich die zwei Befestigungsflansche 14 auskragen, über die das Lagergehäuse 10 am Maschinenträger 12 insbesondere über Schrauben befestigt wird.

Gemäß einer ersten Variante, die in den Fig. 3A,3B dargestellt ist, weist das Lagergehäuse 10 genau zwei Gehäusesegmente 10A, 10B auf. Jedes der Gehäusesegmente 10A, 10B ist dabei asymmetrisch ausgebildet. Sie erstrecken sich jeweils über etwa 180° und sind als Halbringsegmente ausgebildet. Die beiden Gehäusesegmente 10A, 10B sind bei der Ausgestaltung nach den Fig. 3A, 3B verschieden ausgestaltet sind. Der radial auskragende Befestigungsflansch 14 ist an einem Ende ausgebildet. Am gegenüberliegenden Ende sind jeweils plane Anschlagsflächen 30 ausgebildet, mit denen sich das jeweilige Gehäusesegment 10A, 10B am anderen Gehäusesegment nahe des Befestigungsflanschs 14 jedoch in einem radial nach innen versetzten Bereich abstützt.

Dieser Abstützbereich kragt daher - vorzugsweise bei allen Ausführungsvarianten des Lagergehäuses - in radialer Richtung nicht oder nur geringfügig über den Außendurchmesser des ringförmigen Basiskörpers über. Insbesondere kragt dieser Abstützbereich nicht über den Auflagerand des Maschinenträgers 12 über, auf dem sich die Befestigungsflansche 14 abstützen.

Das erste, untere Gehäusesegment 10A wird bei der Montage vorzugsweise in den Maschinenträger 12 eingedreht, also insbesondere um 90° gedreht, bis der Befestigungsflansch 14 auf den Rand des Maschinenträgers 12 zum Aufliegen kommt. Anschließend wird das zweite Gehäusesegment 10B von oben aufgesetzt. Die Teilungsebene des Lagergehäuses 10 ist bei dieser Variante in horizontaler Richtung orientiert.

Die in den Fig. 4A,4B dargestellte Ausführungsvariante weist wiederum zwei Gehäusesegmente 10A, 10B auf, die jeweils endseitig Anschlagsflächen 30 aufweisen. Diese definieren einen Abstützbereich, an dem sich die beiden Gehäusesegmente 10A, B aneinander abstützen und auch miteinander verbunden werden. Ein jedes Gehäusesegment 10A, 10B weist mittig einen Befestigungsflansch 14 auf. Bei dieser Variante ist insofern eine vertikale Teilungsebene auf der 12:00- und 6:00-Uhr-Position vorgesehen. Zur Montage wird wiederum das erste Gehäusesegment 10A entweder eingedreht oder auch von oben mithilfe eines Krans seitlich an der Rotorwelle 4 vorbeigeführt und bei Bedarf anschließend in radialer Richtung auf diese zu gestellt.

Anschließend wird das zweite Gehäusesegment 10B angebracht. Hierzu ist wiederum entweder ein Eindrehen des zweiten Gehäusesegments 10B oder auch ein seitliches Vorbeiführen an der Rotorwelle 4 vorgesehen. Vorzugsweise wird das zweite Gehäusesegment 10B anschließend in Richtung der Rotorwelle 4 axial zum ersten Gehäusesegment 10A verschoben und wiederum mit Kraft- und Formschlussverbindungselementen mit dem ersten Gehäusesegment 10A verbunden. Die Fügestelle der beiden Gehäusesegmente 10A, 10B ist allgemein durch die Anschlagflächen 30 definiert.

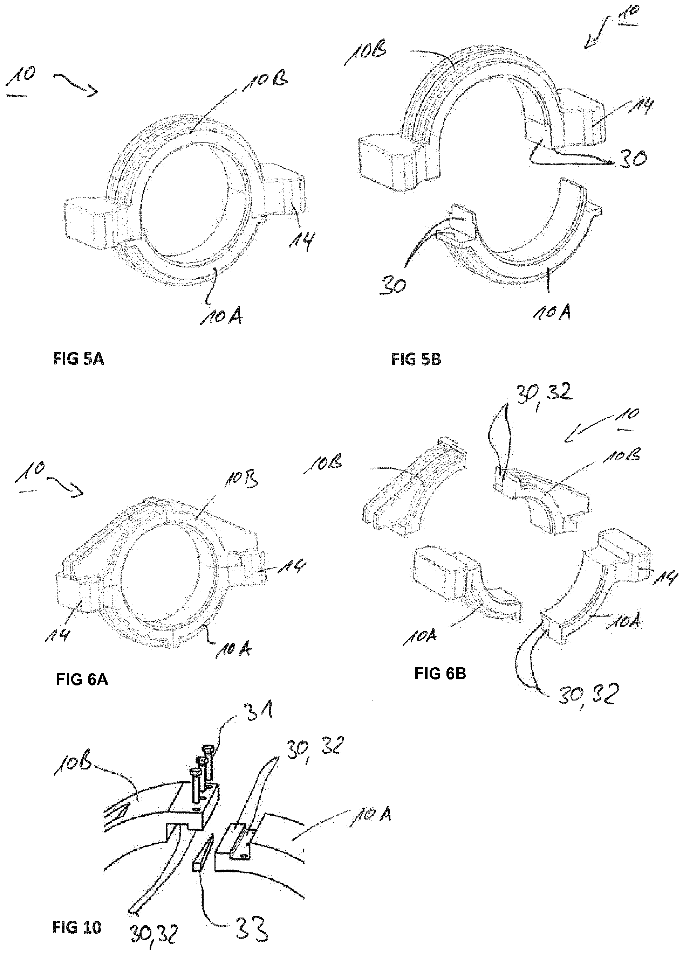

Allgemein - unabhängig von den unterschiedlichen Varianten - weisen diese Anschlagflächen 30 axiale und/oder radiale Formschlusselemente 32, beispielsweise in Form von Absätzen auf (vgl. hierzu beispielsweise Fig. 3B oder auch Fig.6B). Diese Formschlusselemente 32 gewährleisten eine passgenaue Verbindung der beiden Gehäusesegmente 10A10B und vermeiden ungünstige Scher- oder Biegespannungen auf weitere Verbindungselemente, wie Schrauben- oder Klemmelemente, die aus den Windlasten und der Anlagenverformung resultieren.

Die beiden Gehäusesegmente 10A,10B sind vorzugsweise als Gleichteile ausgebildet, sodass eine einfache Fertigung ermöglicht ist.

Zum Verbinden der Gehäusesegmente 10A, 10B sind vorzugsweise allgemein kraftschlüssige Elemente, wie Schrauben 31, oder auch Klemmelemente ähnlich denen zu Fig. 2 dargestellten vorgesehen. Ergänzend sind vorzugsweise noch die Formschlusselemente 32 vorgesehen. Zum Verspannen und zur genauen Ausrichtung der Gehäusesegmente 10A,B sind vorzugsweise ergänzend noch Spannelemente, beispielsweise in Form von Keilelementen 33 vorgesehen. Diese können zwischen komplementäre Formschlusselemente 32 eingetrieben werden. Eine mögliche Ausführungsvariante hierzu ist beispielsweise in Fig. 10 dargestellt: In den Gehäusesegmenten 10A, 10B sind die Formschlusselemente 32 nach Art von sich in Axialrichtung erstreckende Nuten und Stege ausgebildet, die ineinander nach Art von Klauen eingreifen. In einem Zwischenbereich zwischen der Nut des einen Gehäusesegments 10A und dem in diese Nut eingreifenden Stegs des anderen Gehäusesegments 10B wird das Keilelement 33 eingetrieben.

Bei der dritten Variante gemäß den Fig. 5A,5B besitzt das erste untere Gehäusesegment 10A keinen Befestigungsflansch 14. Beide Befestigungsflansche 14 sind an dem zweiten Gehäusesegment 10B angeordnet, welches von oben montiert wird. Das untere Gehäusesegment 10A ist daher nicht direkt mit dem Maschinenträger 12 verbunden, sondern vielmehr mittelbar über das zweite, obere Gehäusesegment 10B. Das untere Gehäusesegment 10A kragt insgesamt nicht über den Auflagerand des Maschinenträgers 12 über.

Das erste, untere Gehäusesegment 10A wird wiederum beispielsweise eingedreht, um unterhalb der Rotorwelle 4 angeordnet zu werden. Während der Montage wird es beispielsweise mithilfe von Hydraulikstempeln gegenüber dem Maschinenträger abgestützt. Im weiteren Verlauf der Montage wird das obere, zweite Gehäusesegment 10B aufgesetzt und am Maschinenträger 12 befestigt. Das untere Gehäusesegment 10A - beispielsweise zusammen mit dem Lager 8 - - wird dann beispielsweise mittels Schrauben nach oben gezogen und gegen das obere Gehäusesegment 10B geführt. Alternativ zu Schrauben werden beispielsweise Klemmelemente zur Verbindung der Gehäusesegmente 10A,10B - ähnlich wie zu Fig. 2 beim Lager 8 beschrieben - eingesetzt. In diesem Fall wird beispielsweise das untere Gehäusesegment 10A mittels Hilfsmittel, wie Hydraulikstempel, aktiv nach oben gegen das obere zweite Gehäusesegment 10B gedrückt.

In bevorzugter Alternative wird zunächst das Lager 8 montiert und das erste Gehäusesegment 10A auf das Lager 8 aufgesetzt und mit dem Lager 8 nach unten gedreht und beispielsweise mit Hilfsmitteln abgestützt bevor dann anschließend das zweite Gehäusesegment 10B aufgesetzt und mit dem ersten Gehäusesegment 10A verbunden wird.

Bei der vierten Ausführungsvariante gemäß den Fig.6A,6B weist das Lagergehäuse 10 insgesamt vier Gehäusesegmente 10A, 10B auf, wobei vorzugsweise diese jeweils paarweise durch Gleichteile gebildet sind. Anstelle der vierteiligen Ausgestaltung ist auch eine drei- oder sonstige mehrteilige Ausgestaltung möglich. Hierdurch ist insbesondere eine flexible Montage möglich. Durch die mehrteilige Ausbildung ist das Gewicht der einzelnen Komponenten reduziert, wodurch die Handhabung vereinfacht ist. In den Fig. 6A,6 sind nochmals gut die sowohl in radialer als auch in axialer Richtung wirksamen Formschlusselemente 32 erkennbar.

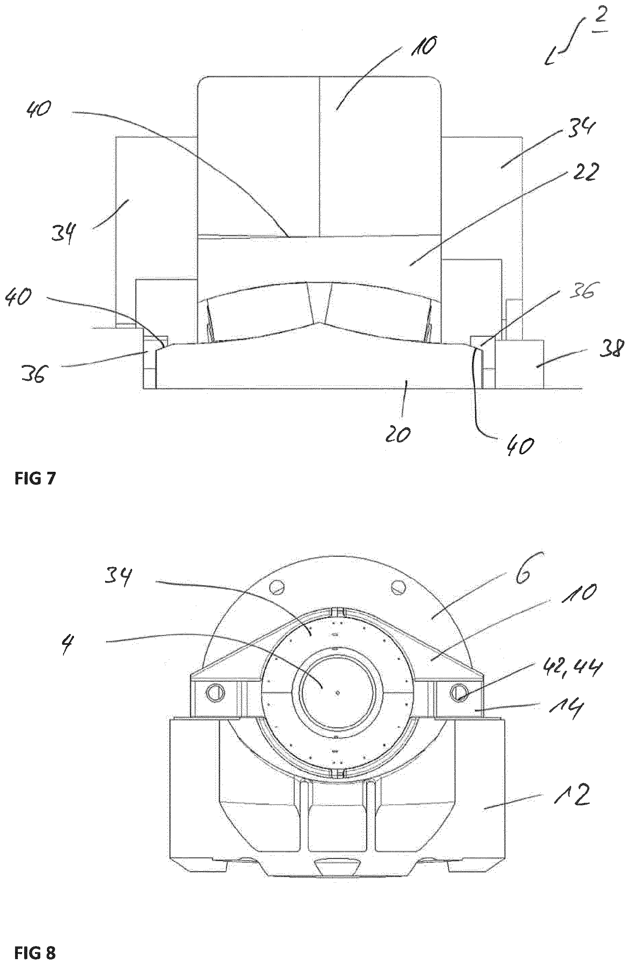

Die Fig.7 zeigt eine ausschnittsweise Darstellung nach Art einer Schnittdarstellung auf den oberen Teilbereich der Lageanordnung 2 oberhalb der durch die Rotorwelle 4 gebildeten Symmetrieebene. Zu erkennen sind der Innenring 22, die im Ausführungsbeispiel nach Art von Tonnenkörpern ausgebildeten Wälzkörper 24 in einer zweireihigen Anordnung, der Außenring 22, das Lagergehäuse 10 sowie in Richtung der Motorwelle 4 betrachtet beidseitig angeordnete Gehäusedeckel 34. In Axialrichtung, also in Richtung der Rotorwelle 4, sind beidseitig des Innenrings 20 Spannringe 36 angeordnet. Der eine Spannring stützt sich an einem Festanschlag ab, welcher beispielsweise durch eine Schulter der Rotorwelle 4 gebildet ist. Der andere, auf der rechten Bildhälfte dargestellte Spannring 36 wird mittels eines Spannelements 38, welches bevorzugt als Wellenmutter ausgebildet ist, in Axialrichtung gegen den Innenring 20 verspannt. Über die Gehäusedeckel 34 erfolgt eine Verspannung in Axialrichtung.

Der Spannring 36 ist insbesondere zweiteilig ausgebildet. Er weist an einem axialen Spalt zwischen Stirnfläche des Innenrings 20 und einen Kegelsitz 40 am Umfang auf. Die Spannringsegmente werden form- und/oder kraftschlüssig miteinander verbunden, und bilden dann den umlaufenden Spannring 36 der den Innenring 20 umschließt und gleichmäßig auf den Lagersitz der Rotorwelle 4 presst.

Durch das getriebeseitige Sicherungs- bzw. Spannelement 38 der Lagerung (meist eine Wellenmutter) werden die beiden Spannringe 36 axial verschoben und erzeugen über den jeweiligen Kegelsitz 40 eine zusätzliche umlaufende Radialkraft die den Innenring 20 auf die Rotorwelle 4 presst. Hierdurch wird bei dem geteilten Innenring 20 ein sicherer Lagersitz mit ausreichend hoher und homogener Fugenpressung gewährleistet. Vorzugsweise wird der geschlossene Spannring 36 als Dichtungslauffläche für die Dichtungselement im Gehäusedeckel 34 genutzt.

Alternativ werden die Spannringsegemente vor der formschlüssigen Montage erwärmt und würden nach Abkühlung eine umlaufende Kraft in die Innenringsegmente einleiten und somit eine ausreichende Fugenpressung sicherstellen. Hierbei wäre gegenüber den Kegelsitzflächen am Umfang eine umlaufende Führungsnut an den Innenringsegmenten vorteilhaft. Das getriebeseitige Spannelement 38 würde bei dieser Ausführung lediglich als axiales Sicherungselement fungieren.

Weiterführend wird ein Kegelsitz zwischen Lagergehäuse 10 und Lageraußenring 22 vorgestellt. Durch die Verschraubung der Gehäusedeckel 34 am Lagergehäuse 10 wird der Außenring 22 gezielt um einen definierten Betrag gegenüber dem Lagergehäuse 10 axial verschoben, was zu einer radialen Verspannung des Lageraußenrings 22 führt. Hierdurch wird eine gezielte Fugenpressung zwischen Lagergehäuse 10 und Lagerring 22 eingestellt und die Radiallast des Wälzlagers justiert. Im weiteren Betrieb kann durch das Einbringen von zusätzlichen axialen Zwischenblechen die Position des Außenrings 22 zum Gehäuse 10 verändert werden und somit die Lagerluft korrigiert werden, falls durch Verschleiß oder Temperaturunterschiede die Lagerluft sich ungünstig ändert.

Ein weiterer Vorteil dieser bevorzugten Ausprägung des Gehäuses 10 und Gehäusedeckels 34 ist, dass der Lageraußenring 22 nicht zwingend eine eigene Verschraubung zur Verbindung der beiden Segmente benötigt. Durch den Kegelsitz im Gehäuse 10 und der axialen Sicherung durch die Gehäusedeckel 34 ist deren Position gesichert. Ergänzend sind beispielsweise noch axiale Bohrungen in der Stirnfläche der Lageraußenringe 22 vorgesehen, über die ein zusätzliches stirnseitiges Verschrauben mit den Gehäusedeckeln erfolgt. In den Gehäusedeckeln sind entsprechende Langlöcher ausgebildet.

Anhand der Fig. 8 wird weiterhin eine spezielle Ausgestaltung dargestellt, gemäß der während der Montage die Nabe 6 und damit der gesamte Rotorstern gegenüber einer Verdrehung gesichert ist. Hierzu sind sogenannte erste und zweite Sicherungselemente vorgesehen, die auch als Rotorlock 42 bezeichnet werden. Bei diesen handelt es sich beispielsweise um bolzenförmige Sicherungselemente. Bei dieser Ausführungsvariante ist in den beiden Befestigungsflansche 14 jeweils eine Bohrung 44 für die Aufnahme des jeweiligen Rotorlocks 42 vorgesehen.

Hierdurch wird gewährleistet, dass während der Demontage des alten geschlossenen Rotorlagergehäuses auf einer Gehäuseseite der Rotorlock 42 weiterhin gesetzt ist. Nach der Montage des ersten Gehäusesegmentes 10A kann der Rotorlock 42 bereits installiert werden, um anschließend den andere Teil des alten geschlossenen Gehäuses zu demontieren. Nach der Montage des geteilten Lagers 8 wird das zweite GehäusesegmentlOB incl. des zweiten Rotorblocks 42 am Maschinenträger 12 befestigt. Durch diese Ausprägung wird ein sicherer Lock der Rotorwelle 4 und der Nabe 6 über mindestens einen Rotorlock 42 jederzeit sichergestellt.

Gemäß einer weiteren, hier nicht näher dargestellten Ausführungsvariante ist der Außenring 22 des Lagers 8 vollständig in das Lagergehäuse 10 integriert. Hierbei wird die Laufbahn direkt in das Lagergehäuse 10 geschliffen. D.h. die radiale Innenseite des Lagergehäuses 10 bildet eine Laufbahn aus Die Laufbahn kann hier im Querschnitt betrachtet konkave bei Kugel oder Pendelrollenlager oder Linienförmig bei Kegel- oder Zylinderrollenlager sein. Die Verbindungelemente am separaten Lageraußenring 22 entfallen vollständig und werden durch die Verbindungselemente des Rotorlagergehäuses 10 ersetzt. Vorteilhaft ist bei dieser bevorzugten Ausprägung, dass kein Ringwandern oder Passungsrost im Lagersitz des Außenrings 22 entstehen kann. Weiterhin wird die Teilezahl reduziert was sich positiv auf Wirtschaftlichkeit und Zuverlässigkeit auswirkt. Das Gehäuse 10 ist dann vorzugsweise aus Wälzlagerstahl zu fertigen und entsprechend im Laufbahnbereich zu härten. Gegenüber einem Gussgehäuse werden durch die Materialanpassung zusätzliche Festigkeitsreserven bei der Anbindung an den Maschinenträger generiert. Diese Ausprägung kann mit den Varianten 1 bis 4 kombiniert werden.

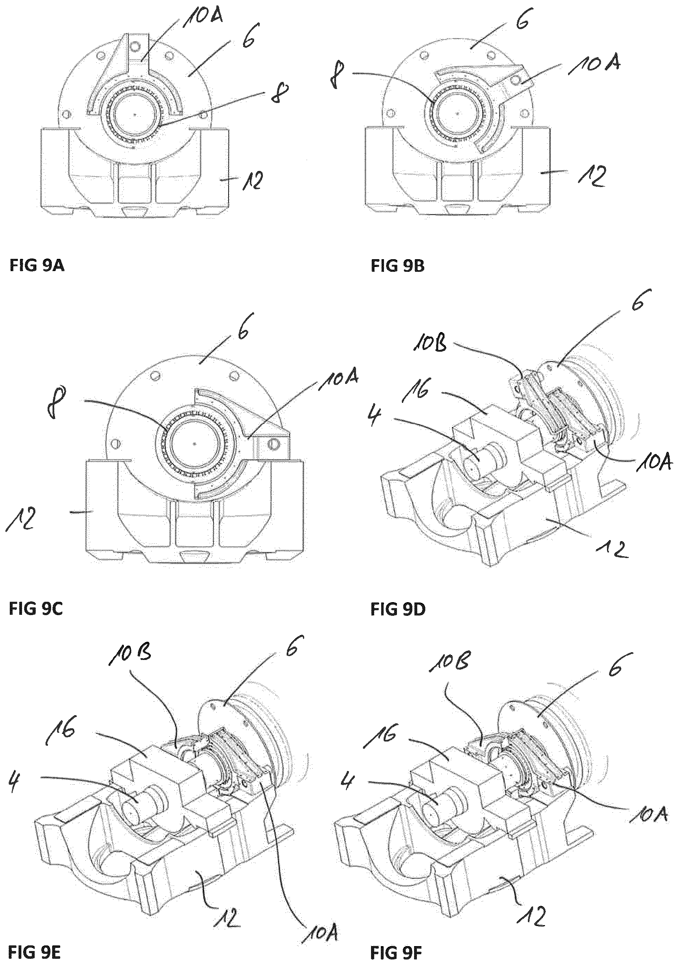

Die Montage des Lagers 8 sowie des Lagergehäuses 10 wird nachfolgend anhand der Ausführungsvariant des Lagergehäuses 10 gemäß der Variante 2 (Fig. 4A,4B) unter Bezugnahme auf die Fig. 9A bis 9F näher erläutert. Die Beschreibung der Montage gilt grundsätzlich jedoch auch für andere Varianten des Lagergehäuses 10.

Bei dieser Ausführungsvariante ist bereits das Lager 8 auf der Rotorwelle 4 angebracht. Anschließend wird das erste Gehäusesegment 10A von oben beispielsweise mithilfe eines Krans herangeführt (Fig. 9A) und anschließend beispielsweise um 90° im Uhrzeigersinn in dem Maschinenträger 12 eingedreht, bis der Befestigungsflansch 14 auf dem Rand des Maschinenträgers 12 zum Aufliegen kommt. Zweckdienlicherweie wird das erste Gehäusesegment 10A axial beabstandet vom Lager 8 eingefügt und anschließend in Axialrichtung auf das Lager 8, also in Richtung zur Nabe 6, verschoben.

Anschließend wird das zweite Gehäusesegment 10B vorzugsweise wiederum von oben aufgesetzt und zwar in der axial entfernten Position beabstandet vom Lager 8 und zum ersten Gehäusesegment 10A. Auch das zweite Gehäusesegment 10B wird vorzugsweise wiederum um etwa eine 90°-Drehung, nunmehr jedoch entgegen des Uhrzeigersinns, in den Maschinenträger 12 eingedreht, bis der Befestigungsflansch14 zum Aufliegen auf den Maschinenträger 12 kommt. Anschließend wird das zweite Gehäusesegment 10B in Axialrichtung verschoben und schließlich mit dem ersten Gehäusesegment 10A verbunden (Fig. 9E,9F).

Die Montagereihenfolge der einzelnen Komponenten kann dabei unterschiedlich sein. Beispielsweise wird zunächst das Lager 8 auf die Rotorwelle 4 angebracht und anschließend werden die beiden Gehäusesegmente 10A,10B um das Lager 8 herum angeordnet. Alternativ besteht auch die Möglichkeit, dass zunächst das erste Gehäusesegment 10A angebracht wird, anschließend das Lager 8 montiert wird und erst am Ende dann das zweite Gehäusesegment 10B montiert wird.

Es sind allgemein insbesondere folgende unterschiedliche Montagevarianten vorgesehen:
a) Das Lager 8 wird auf der Rotorwelle 4 montiert. Die Gehäusesegmente 10A, 10B werden nacheinander an einer axial vom Lager 8 beabstandeten Montageposition angeordnet und anschließend in Richtung zum Lager 8 verschoben und anschließend am Maschinenträger 12 befestigt.

Die beiden Gehäusesegmente 10A, B werden dabei entweder sukzessive auf das Lager 8 aufgeschoben und dann miteinander verbunden. Alternativ werden die beiden Gehäusesegmente 10A, B zunächst miteinander verbunden und erst dann auf das Lager 8 aufgeschoben. Hierbei wird für das Aufschieben auf das Lager 8 ein ausreichendes Spiel vorgehalten, indem die beiden Gehäusesegmente 10A, B noch nicht vollständig gegeneinander verspannt sind. Dieses Verspannen erfolgt beispielsweise mit Hilfe von Schrauben oder auch Keilelementen im Bereich der Anschlagsflächen 30.
b) Zuerst wird das (untere) erste Gehäusesegment 10A angebracht und beispielsweise am Maschinenträger 12 über den Befestigungsflansch 14 befestigt. Anschließend wird das Lager 8 montiert. Danach wird das zweite Gehäusesegment 10B montiert, mit dem ersten Gehäusesegmente 10B verbunden sowie am Maschinenträger 12 befestigt.

Bei allen Varianten wird zumindest das erste Gehäusesegment 10A um die Rotorwelle 4 in den Maschinenträger 12 eingedreht oder seitlich an der Rotorwelle 4 vorbei- und in den Maschinenträger 12 eingeführt. Beim Eindrehen wird das Gehäusesegment 10A beispielsweise auf das Lager 8 aufgelegt und mit dessen Hilfe eingedreht.

Das hier beschriebene spezielle Verfahren zum Austausch des Lagers 8 ist insbesondere durch nachfolgende Schritte gekennzeichnet. Das Verfahren wird insbesondere bei Dreipunktlagerungen oder bei aufgelösten Lagerungen eingesetzt:
1. Befestigung einer Traverse 16, die die Rotorwelle 4 während des Austausches fixiert,
2. Trennen des alten Lagergehäuses und alten Lagers und Demontage dieser Bauteile,
3. Montage des geteilten Lagers 8 sowie des geteilten Lagergehäuses 10 wie zuvor beschrieben,
4. das Lager 8 weist vorzugsweise - im Vergleich zu dem alten, gebrauchten Lager 8 - eine angepasste, modifizierter Lagergeometrie auf, insbesondere vor dem Hintergrund der beengten Einbauverhältnisse,
5. Demontage der Traverse und Wiederaufnahme des Betriebs.

### Bezugszeichenliste

- 2: Lageranordnung
- 4: Rotorwelle
- 6: Nabe
- 8: Lager
- 10: Lagergehäuse
- 10A,10B: Gehäusesegmente
- 12: Maschinenträger
- 14: Befestigungsschenkel
- 16: Traverse
- 18: Lagerringsegmente
- 20: Innenring
- 22: Außenring
- 24: Wälzkörper
- 26: Klemmelemente
- 28: Trennfuge
- 30: Anschlussflansch
- 31: Schrauben
- 32: Formschlusselemente
- 33: Keilelement
- 34: Gehäusedeckel
- 36: Spannring
- 38: Spannelement
- 40: Kegelsitz
- 42: Sicherungselement
- 44: Bohrung

## Patentansprüche

1. Verfahren zum Austausch eines gebrauchten Lagers durch ein neues Lager (8), insbesondere zum Austausch eines Großlagers wie das Hauptlager einer Windkraftanlage, wobei
- das gebrauchte Lager eine Rotorwelle (4) lagert und in einem gebrauchten Lagergehäuse angeordnet ist, welches an einem Maschinenträger (12) befestigt ist, wobei der Maschinenträger (12) eine halbschalenartige Ausgestaltung mit einer Ausnehmung aufweist, in die das Lagergehäuse (10) sowie das Lager (8) eintauchen und wobei das Lagergehäuse (10) sich seitlich mit radial auskragenden Befestigungsschenkeln (14) auf einem Rand des Maschinenträgers (12) abstützt
- das gebrauchte Lager (8) sowie das gebrauchte Lagergehäuse entfernt werden,
- das neue Lager (8) in Umfangsrichtung in Lagerringsegmente (18) geteilt ist und die Lagerringsegmente (18) um die Rotorwelle (4) angebracht und anschließend miteinander verbunden werden,
- für das neue Lager (8) ein Lagergehäuse (10) vorgesehen ist,
- das Lagergehäuse (10) für eine Befestigung am Maschinenträger (12) Befestigungsflansche (14) aufweist und in Umfangsrichtung in zumindest ein erstes Gehäusesegment (10A) sowie zumindest ein zweites Gehäusesegment (10B) unterteilt ist,
- wobei die beiden Gehäusesegmente (10A,B) ohne Demontage der Rotorwelle (4) um diese herum und um das Lager (8) angebracht werden, wobei
- zumindest das erste Gehäusesegment (10A) zur Montage um die Rotorwelle (14) gedreht, insbesondere in den Maschinenträger (12) eingedreht und nachfolgend mit dem zweiten Gehäusesegment (10B) verbunden wird oder
- zumindest das erste Gehäusesegment (10A) in einer Richtung senkrecht zur Rotorwelle (4) seitlich an dieser vorbeigeführt und anschließend bei Bedarf radial in Richtung zur Rotorwelle (4) versetzt und mit dem zweiten Gehäusesegment (10B) verbunden wird und wobei weiterhin
- zumindest an dem ersten Gehäusesegment (10A) maximal ein radial auskragender Befestigungsschenkel angeordnet ist, über den eine Befestigung am Maschinenträger erfolgt.

2. Verfahren nach dem vorhergehenden Anspruch, bei dem auch das zweite Gehäusesegment (10B) um die Rotorwelle (4) gedreht oder senkrecht zur Rotorwelle seitlich an dieser vorbeigeführt wird.

3. Verfahren nach einem der vorhergehenden Ansprüche, bei dem das erste und vorzugsweise auch das zweite Gehäusesegment (10B) entlang der Rotorwelle (4) axial verschoben werden, insbesondere relativ zueinander.

4. Verfahren nach dem vorhergehenden Anspruch, bei dem eine Traverse (16) montiert wird, welche die Rotorwelle (4) abstützt.

5. Verfahren nach einem der beiden vorhergehenden Ansprüche, bei dem die beiden Gehäusesegmente (10A,B) in Umfangsrichtung und / oder in Richtung der Rotorwelle (4) formschlüssig miteinander verbunden sind.

6. Verfahren nach einem der vorhergehenden Ansprüche, bei dem das neue Lager (8) sowie das gebrauchte Lager jeweils Wälzkörper (24) aufweisen, wobei
- die Anzahl der Wälzkörper (24) des neuen Lagers (8) im Vergleich zum gebrauchten Lager insbesondere um 10-35% erhöht ist und / oder
- der Durchmesser der Wälzkörper (24) des neuen Lagers (8) im Vergleich zum gebrauchten Lager insbesondere um 5-30% verringert ist und/oder
- die Länge der Wälzkörper (24) des neuen Lagers (8) im Vergleich zum gebrauchten Lager verringert ist, insbesondere um 5-30%.

7. Verfahren nach einem der vorhergehenden Ansprüche, bei dem die Lagerringsegmente (18) über Klemmelemente (26) insbesondere schraubenlos miteinander verbunden werden.

8. Verfahren nach einem der vorhergehenden Ansprüche, bei dem die Rotorwelle (4) während der Montage mit einer Nabe (6) verbunden ist, die während der Montage gegen eine Verdrehung gesichert ist, wobei hierzu
- zunächst nach einer Teilung des alten Lagergehäuses ein Teil desselben noch am Maschinenträger (12) befestigt und mit der Nabe (6) zur Verdrehsicherung über ein erstes Sicherungselement verbunden ist,
- anschließend eines der Gehäusesegemente (10A,B) am Maschienenträger (12) befestigt und das Gehäusesegment (10A,B) mit der Nabe (6) zur Verdrehsicherung über ein zweites Sicherungselement (42) verbunden wird,
- anschließend die Verdrehsicherung über das erste Sicherungselement gelöst wird.

9. Lageranordnung (2), insbesondere für ein Großlager wie ein Hauptlager für eine Windkraftanlage, mit einem in einem Lagergehäuse (10) angeordneten Lager (8), welches eine Rotorwelle (4) lagert, wobei das Lagergehäuse (10) an einem Maschinenträger (12) befestigt und in Umfangsrichtung in zumindest ein erstes Gehäusesegment (10A) sowie zumindest ein zweites Gehäusesegment (10B) unterteilt ist, wobei der Maschinenträger (12) eine halbschalenartige Ausgestaltung mit einer Ausnehmung aufweist, in die das Lagergehäuse (10) sowie das Lager (8) eintauchen und wobei das Lagergehäuse (10) sich seitlich mit radial auskragenden Befestigungsschenkeln (14) auf einem Rand des Maschinenträgers (12) abstützt und dort mit diesem befestig ist, wobei die Gehäusesegmente (10A,B) derart ausgebildet sind, dass sie bei montierter Rotorwelle (4), d.h. ohne Demontage der Rotorwelle (4) und eines Rotorsterns montierbar und/oder demontierbar sind, wobei zumindest das erste Gehäusesegment (10A) zur Montage oder Demontage um die Rotorwelle (4) drehbar ist oder in einer Richtung senkrecht zur Rotorwelle (4) seitlich an dieser vorbeiführbar ist, wobei zumindest an dem ersten Gehäusesegment (10A) maximal ein radial auskragender Befestigungsschenkel angeordnet ist, über den eine Befestigung am Maschinenträger erfolgt, so dass das Lagergehäuse (10) trotz der seitlich auskragenden Befestigungsschenkel (14) um die Rotorwelle (4) herum montierbar ist.

10. Lageranordnung (2) nach Anspruch 9, bei der zumindest des erste Gehäusesegment (10A) und vorzugsweise alle Gehäusesegmente (10A,B) höchstens einen Befestigungsschenkel (14) aufweist, über den eine Befestigung am Maschinenträger (12) erfolgt.

11. Lageranordnung (2) nach einem der Ansprüche 9 bis 10, bei dem
- zwei Gehäusesegmente (10A, B) von vorzugsweise jeweils 180° vorgesehen sind und jedes genau einen Befestigungsschenkel (14) aufweist, welcher in Umfangsrichtung betrachtet endseitig am Gehäusesegment (10A,B) ausgebildet ist, wobei sich das jeweils andere Gehäusesegment (10A,B) sich bevorzugt im Bereich des Befestigungsschenkels (14) abstützt, oder
- zwei Gehäusesegmente (10A, B) von vorzugsweise jeweils 180° vorgesehen sind und jedes genau einen Befestigungsschenkel (14) aufweist, der beabstandet von den Enden des Gehäusesegments (10A,B) und insbesondere mittig angeordnet ist, oder
- zwei Gehäusesegmente (10A, B) von vorzugsweise jeweils 180° vorgesehen sind und an dem einen Gehäusesegment (10B) beidendseitig jeweils ein Befestigungsschenkel (14) ausgebildet ist und das andere Gehäusesegment sich im Bereich der Befestigungsschenkel (14) abstützt, oder
- mehr als zwei und insbesondere vier Gehäusesegmente (10A,B) ausgebildet sind, die zumindest zum Teil vorzugsweise als Gleichteile ausgebildet sind, wobei bei vier Gehäusesegmenten (10A,B) zwei jeweils endseitig einen Befestigungsschenkel (14) aufweisen.

12. Lageranordnung (2) nach einem der Ansprüche 9 bis 11, bei der das Lagergehäuse (10) eine integrierte Laufbahn aufweist und einen Außenring des Lagers (8) bildet.

13. Lageranordnung (2) nach einem der Ansprüche 9 bis 12, bei dem das Lager (8) Lagerringe aufweist, nämlich einen Innenring (20) und einen Außenring (22), die jeweils in Lagerringsegmente (18) unterteilt sind, wobei zwischen zumindest einem der Lagerringe (20, 22) und einem Spannelement (38) ein Kegelsitz (40) ausgebildet ist, so dass bei einem axialen Verspannen des Spannelements (38) eine radiale Spannkraft auf den jeweiligen Lagerring (18) ausgeübt wird, wobei vorzugsweise der Lagerinnenring (20) mit einer Wellenmutter und/oder der Lageraußenring (22) mit Hilfe des Lagergehäuses (10) verspannt wird.

## Claims

1. Method for replacing a used bearing with a new bearing (8), in particular for replacing a large bearing such as the main bearing of a wind power plant, wherein
- the used bearing supports a rotor shaft (4) and is arranged in a used bearing housing, which is fastened to a machine carrier (12), wherein the machine carrier (12) has a half-shell-like configuration with a recess, into which the bearing housing (10) and the bearing (8) immerse and wherein the bearing housing (10) laterally supports itself on an edge of the machine carrier (12) with radially projecting fastening legs (14),
- the used bearing (8) and the used bearing housing are removed,
- the new bearing (8) is divided into bearing ring segments (18) in the circumferential direction and the bearing ring segments (18) are fitted around the rotor shaft (4) and subsequently connected to one another,
- a bearing housing (10) is provided for the new bearing (8),
- the bearing housing (10) has fastening flanges (14) for fastening on the machine carrier (12) and is subdivided in the circumferential direction into at least one first housing segment (10A) and at least one second housing segment (10B),
- wherein the two housing segments (10A, B) are fitted around the rotor shaft (4) and around the bearing (8) without disassembly of the rotor shaft (4),
wherein
- at least the first housing segment (10A) is rotated around the rotor shaft (14) for assembly, in particular is rotated into the machine carrier (12) and subsequently is connected to the second housing segment (10B), or
- at least the first housing segment (10A) in a direction perpendicular to the rotor shaft (4) is guided laterally past the latter and subsequently, if necessary, is offset radially in the direction of the rotor shaft (4) and is connected to the second housing segment (10B), and wherein furthermore
- at maximum one radially projecting fastening leg is arranged at least on the first housing segment (10A), via which a fastening to the machine carrier is effected.

2. Method according to the preceding claim, in which the second housing segment (10B) is also rotated about the rotor shaft (4) or is guided laterally past the rotor shaft perpendicularly thereto.

3. Method according to one of the preceding claims, in which the first and preferably also the second housing segment (10B) are axially displaced along the rotor shaft (4), in particular relative to one another.

4. Method according to the preceding claim, wherein a traverse (16) is assembled, which supports the rotor shaft (4).

5. Method according to one of the two preceding claims, in which the two housing segments (10A,B) are positively connected to one another in the circumferential direction and/or in the direction of the rotor shaft (4).

6. Method according to one of the preceding claims, in which the new bearing (8) and the used bearing each have rolling elements (24),
wherein
- the number of rolling elements (24) of the new bearing (8) is increased in particular by 10-35% compared to the used bearing, and/or
- the diameter of the rolling elements (24) of the new bearing (8) is reduced in particular by 5-30% compared to the used bearing, and/or
- the length of the rolling elements (24) of the new bearing (8) is reduced compared to the used bearing, in particular by 5-30%.

7. Method according to one of the preceding claims, in which the bearing ring segments (18) are connected to one another via clamping elements (26), in particular without screws.

8. Method according to one of the preceding claims, in which the rotor shaft (4) is connected to a hub (6) during assembly, said hub (6) being secured against rotation during assembly, wherein for this purpose
- first of all, after a division of the old bearing housing, a part of the latter is still fastened to the machine carrier (12) and is connected to the hub (6) for securing against rotation via a first securing element,
- subsequently, one of the housing segments (10A,B) is fastened to the machine carrier (12) and the housing segment (10A, B) is connected to the hub (6) via a second securing element (42) for securing against rotation,
- subsequently, the anti-rotation device is released via the first securing element.

9. Bearing assembly (2), in particular for a large bearing such as a main bearing for a wind power plant, with a bearing (8) arranged in a bearing housing (10), which supports a rotor shaft (4), wherein the bearing housing (10) is fastened to a machine carrier (12) and is subdivided in the circumferential direction into at least one first housing segment (10A) and at least one second housing segment (10B), wherein the machine carrier (12) has a half-shell-like configuration with a recess, into which the bearing housing (10) and the bearing (8) immerse, and wherein the bearing housing (10) laterally supports itself on an edge of the machine carrier (12) with radially projecting fastening legs (14) and is fastened there with the latter, wherein the housing segments (10A, B) are designed in such a way that they can be assembled or disassembled, when the rotor shaft (4) is assembled, i.e. without disassembly of the rotor shaft (4) and a rotor star, wherein at least the first housing segment (10A) can be rotated about the rotor shaft (4) for assembly or disassembly or can be guided in a direction perpendicular to the rotor shaft (4) laterally past the latter, wherein at least on the first housing segment (10A) at maximum one radially projecting fastening leg is arranged, via which a fastening to the machine carrier is effected, so that the bearing housing (10) can be fitted around the rotor shaft (4) despite the laterally projecting fastening leg (14).

10. Bearing assembly (2) according to claim 9, in which at least the first housing segment (10A) and preferably all housing segments (10A,B) have at least one fastening leg (14), via which a fastening to the machine carrier (12) is effected.

11. Bearing assembly (2) according to one of claims 9 to 10, in which
- two housing segments (10A,B) of preferably respectively 180° are provided and each has precisely one fastening leg (14), which, viewed in the circumferential direction, is formed at the end on the housing segment (10A,B), wherein the respective other housing segment (10A,B) preferably supports itself in the region of the fastening leg (14), or
- two housing segments (10A,B) of respectively preferably 180° are provided and each has exactly one fastening leg (14), which is arranged at a distance from the ends of the housing segment (10A,B) and in particular is arranged centrally, or
- two housing segments (10A,B) of respectively preferably 180° are provided and a fastening leg (14) is formed on each end side of the one housing segment (10B) and the other housing segment supports itself in the region of the fastening legs (14), or
- more than two and in particular four housing segments (10A,B) are formed, which are preferably formed at least in part as identical parts, wherein in the case of four housing segments (10A, B) two each have a fastening leg (14) at the ends.

12. Bearing assembly (2) of one of claims 9 to 11, wherein the bearing housing (10) has an integral track and forms an outer race of the bearing (8).

13. Bearing assembly (2) according to one of claims 9 to 12, in which the bearing (8) has bearing rings, namely an inner ring (20) and an outer ring (22), which are each subdivided into bearing ring segments (18), wherein a conical seat (40) is formed between at least one of the bearing rings (20, 22) and a clamping element (38), so that, when the clamping element (38) is axially clamped, a radial clamping force is exerted on the respective bearing ring (18), wherein the bearing inner ring (20) is preferably clamped by means of a shaft nut and/or the bearing outer ring (22) is clamped by means of the bearing housing (10).

## Revendications

1. Procédé pour le remplacement d'un palier usagé par un nouveau palier (8), en particulier pour le remplacement d'un palier de grande taille, tel que le palier principal d'une centrale éolienne, dans lequel
- le palier usagé supporte un arbre de rotor (4) et est disposé dans un boîtier de palier usagé, qui est fixé à un support de machine (12), dans lequel le support de machine (12) a une configuration en forme de demi-coque avec un évidement, dans lequel le boîtier de palier (10) et le palier (8) immergent et dans lequel le boîtier de palier (10) s'appuie latéralement sur un bord du support de machine (12) avec des branches de fixation (14) faisant saillie radialement,
- le palier usagé (8) et le boîtier de palier usagé sont retirés,
- le nouveau palier (8) est divisé en segments de bague de palier (18) dans la direction circonférentielle et les segments de bague de palier (18) sont montés autour de l'arbre de rotor (4) et ensuite reliés les uns aux autres,
- un boîtier de palier (10) est prévu pour le nouveau palier (8),
- le boîtier de palier (10) comprend des brides de fixation (14) pour le montage sur le support de machine (12) et est subdivisé dans la direction circonférentielle en au moins un premier segment de boîtier (10A) et au moins un deuxième segment de boîtier (10B),
- dans lequel les deux segments de boîtier (10A, B) sont montés autour de l'arbre de rotor (4) et autour du palier (8) sans démontage de l'arbre de rotor (4), dans lequel
- au moins le premier segment de boîtier (10A) est tourné autour de l'arbre de rotor (14) pour le montage, en particulier est vissé dans le support de machine (12) et est ensuite relié au deuxième segment de boîtier (10B), ou
- au moins le premier segment de boîtier (10A) est guidé dans une direction perpendiculaire à l'arbre de rotor (4) latéralement le long de celui-ci et ensuite, si nécessaire, est décalé radialement en direction de l'arbre de rotor (4) et est relié au deuxième segment de boîtier (10B), et dans lequel en outre
- au maximum une branche de fixation faisant saillie radialement est disposée au moins sur le premier segment de boîtier (10A), par laquelle la fixation au support de machine est effectuée.

2. Procédé selon la revendication précédente, dans lequel le deuxième segment de boîtier (10B) est également mis en rotation autour de l'arbre de rotor (4) ou est guidé perpendiculairement à l'arbre de rotor latéralement le long de celui-ci.

3. Procédé selon l'une des revendications précédentes, dans lequel le premier et de préférence aussi le deuxième segment de boîtier (10B) sont déplacés axialement le long de l'arbre de rotor (4), en particulier l'un relativement à l'autre.

4. Procédé selon la revendication précédente, dans lequel est montée une traverse (16), qui supporte l'arbre de rotor (4).

5. Procédé selon l'une des deux revendications précédentes, dans lequel les deux segments de boîtier (10A, B) sont reliés l'un à l'autre par complémentarité de forme dans la direction circonférentielle et/ou dans la direction de l'arbre de rotor (4).

6. Procédé selon l'une des revendications précédentes, dans lequel le nouveau palier (8) et le palier usagé comprennent chacun des éléments de roulement (24), dans lequel
- le nombre d'éléments de roulement (24) du nouveau palier (8) est augmenté, en particulier de 10 à 35 %, par rapport au palier usagé,
et/ou- le diamètre des éléments de roulement (24) du nouveau palier (8) est réduit, en particulier de 5 à 30 %, par rapport au palier usagé, et/ou
- la longueur des éléments de roulement (24) du nouveau palier (8) est réduite, en particulier de 5 à 30 %, par rapport au palier usagé.

7. Procédé selon l'une des revendications précédentes, dans lequel les segments de bague de palier (18) sont reliés entre eux par des éléments de serrage (26), en particulier sans vis.

8. Procédé selon l'une des revendications précédentes, dans lequel l'arbre de rotor (4) est relié à un moyeu (6) pendant le montage, ledit moyeu (6) étant protégé contre la rotation pendant le montage, dans lequel à cet effet
- tout d'abord, après une division de l'ancien boîtier de palier, une partie de celui-ci est encore fixée au support de machine (12) et est reliée au moyeu (6) pour la sécurité anti-rotation par un premier élément de sécurité,
- ensuite, l'un des segments de boîtier (10A, B) est fixé au support de machine (12) et le segment de boîtier (10A, B) est relié au moyeu (6) par un deuxième élément de sécurité (42) afin d'empêcher toute rotation,
- ensuite, le dispositif anti-rotation est libéré par l'intermédiaire du premier élément de sécurité.

9. Agencement de palier (2), en particulier pour un palier de grande taille, tel qu'un palier principal pour une éolienne, avec un palier (8) disposé dans un boîtier de palier (10), qui supporte un arbre de rotor (4), dans lequel le boîtier de palier (10) est fixé à un support de machine (12) et est subdivisé dans la direction périphérique en au moins un premier segment de boîtier (10A) et au moins un deuxième segment de boîtier (10B), dans lequel le support de machine (12) a une configuration en forme de demi-coque avec un évidement, dans lequel le boîtier de palier (10) et le palier (8) immergent et dans lequel le boîtier de palier (10) s'appuie latéralement sur un bord du support de machine (12) avec des branches de fixation (14) faisant saillie radialement et y est fixé avec celui-ci, dans lequel les segments de palier (10A, B) sont conçus de telle sorte qu'ils peuvent être montés et/ou démontés, lorsque l'arbre de rotor (4) est monté, c'est-à-dire sans démontage de l'arbre de routeur (4) et d'un étoile de routeur, dans lequel au moins le premier segment de boîtier (10A) peut être tourné autour de l'arbre de rotor (4) pour le montage ou le démontage ou peut être guidé dans une direction perpendiculaire à l'arbre de rotor (4) latéralement le long de celui-ci, dans lequel au moins sur le premier segment de boîtier (10A) est disposée au maximum une branche de fixation faisant saillie radialement, par laquelle une fixation sur le support de machine est effectuée, de sorte que le boîtier de palier (10) peut être monté autour de l'arbre de rotor (4) malgré la branche de fixation (14) faisant saillie latéralement.

10. Agencement de palier (2) selon la revendication 9, dans lequel au moins le premier segment de boîtier (10A) et de préférence tous les segments de boîtier (10A, B) comprennent au maximum une branche de fixation (14), par laquelle la fixation au support de machine (12) est effectuée.

11. Agencement de palier (2) selon l'une des revendications 9 à 10, dans lequel
- deux segments de boîtier (10A, B) de préférence chacun à 180° sont prévus et chacun comprend exactement une branche de fixation (14) qui, vue dans la direction périphérique, est formée à l'extrémité sur le segment de boîtier (10A, B), dans lequel le respectivement autre segment de boîtier (10A, B) s'appui de préférence dans la zone de la branche de fixation (14), ou
- deux segments de boîtier (10A, B) de préférence chacun à 180° sont prévus et chacun comprend exactement une branche de fixation (14), qui est disposée à une distance des extrémités du segment de boîtier (10A,B) et en particulier est disposé au centre, ou
- deux segments de boîtier (10A, B) de préférence chacun à 180° sont prévus et respectivement une branche de fixation (14) est formée à chaque extrémité d'un segment de boîtier (10B) et l'autre segment de boîtier s'appuie dans la zone des branches de fixation (14), ou
- plus de deux et en particulier quatre segments de boîtier (10A, B) sont formés, qui sont de préférence formés au moins en partie en tant que pièces identiques, dans lequel dans le cas de quatre segments de boîtier (10A, B) deux d'entre eux ont chacun une branche de fixation (14) aux l'extrémités.

12. Agencement de palier (2) de l'une des revendications 9 à 11, dans lequel le boîtier de palier (10) comprend une piste intégrale et forme une bague extérieure du palier (8).

13. Agencement de palier (2) selon l'une des revendications 9 à 12, dans lequel le palier (8) comprend des bagues de palier, à savoir une bague intérieure (20) et une bague extérieure (22), qui sont chacune subdivisées en segments de bague de palier (18), dans lequel un siège conique (40) est formé entre au moins l'une des bagues de palier (20, 22) et un élément de serrage (38), de sorte que, lorsque l'élément de serrage (38) est serré axialement, une force de serrage radiale est exercée sur la bague de palier respective (18), dans lequel la bague de palier intérieure (20) est de préférence serrée au moyen d'un écrou d'arbre et/ou la bague de palier extérieure (22) est serrée au moyen du boîtier de palier (10).
